Europäisches Patentamt

European Patent Office

Office européen des brevets

(19)

(11) **EP 1 291 640 A1**

(12) **EUROPEAN PATENT APPLICATION**

(43) Date of publication:
**12.03.2003 Bulletin 2003/11**

(51) Int Cl.[7]: **G01N 21/33**, G01N 21/59,
G01J 1/42

(21) Application number: **01121211.5**

(22) Date of filing: **05.09.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Beiersdorf AG**
**20253 Hamburg (DE)**

(72) Inventors:
• **Wendel, Volker, Dr.**
**20255 Hamburg (DE)**
• **Uhlmann, Beate, Dr.**
**22453 Hamburg (DE)**
• **Mann, Tobias**
**22179 Hamburg (DE)**
• **Klette, Eckhard**
**23843 Bad Oldesloe (DE)**

(54) **In vitro test method to assess the UVA protection performance of sun care products**

(57) In-vitro test method to measure the UVA protection performance (UVAPF) of sun care products by measuring the in-vitro absorbance data, normalising the spectrum to the in-vivo SPF and calculating the UVA protection performance by the following formula:

$$UVAPF_{calculated} = \frac{\int\limits_{320nm}^{400nm} E(\lambda) * S(\lambda)}{\int\limits_{320nm}^{400nm} E(\lambda) * S(\lambda)/10^{(A_\lambda * C)}}$$

Where

$E(\lambda)$ = irradiance at wavelength $\lambda$ of the light spectrum used
$C$ = constant factor for the adjustment of the spectrum to the in-vivo measurement
$S(\lambda)$ = effectiveness of a biological UVA endpoint at wavelength $\lambda$;
$A(\lambda)$ = absorbance

Figure 1. Monochromatic measurement

EP 1 291 640 A1

## Description

A method is described that is suitable for predicting the UVA protection delivered by sunscreens, which should be considered in any future official discussion on UVA methodology.

The UVA protection delivered by sunscreens is an issue of major importance due to increasing knowledge about UVA-induced skin damage. In Europe there is no officially accepted method available to determine the level of UVA protection. Therefore the objective of the present study was to develop a new method combining the merits of an in vitro model, which is simple and reproducible, with the good predictive value of in vivo results. Transmission measurements are carried out through a thin layer of sample on roughened PMMA-plates (Plexiglas®). The amount of sunscreen is adjusted to the roughness of the plates to ensure an optimal distribution of the sample and measurement in the optimal range of the spectrophotometer. Normalisation of the absorption spectrum to the label (in vivo) SPF makes it possible to predict the level of in vivo UVA protection. Furthermore, this new method shows a very good correlation with in vivo results for the UVA protection performance (PPD) of 45 different commercial sunscreens.

Overexposure to sunlight, particularly to UV rays, has harmful effects on human skin. A number of recent studies have shown that in addition to the most damaging UVB irradiation (290-320nm), UVA irradiation (320-400nm) also causes skin damage. Alterations occur on the biochemical, cellular and functional level. The effects of UVA are mainly mediated by free radicals, e.g. reactive oxygen species. The visible signs are often the result of long-term, cumulative effects. It is thought that UVA induced premature skin ageing is a process of many years.

Sunscreens should protect the skin against the effects of both short-wavelength UVB and long-wavelength UVA radiation. The sun protection factor (SPF), which is measured in Europe according to the COLIPA standard protocol (1994) [COLIPA, European Cosmetic, Toiletry and Perfumery Association, Colipa SPF Test Method, 94/289 (1994)], indicates the efficacy of sunburn or mainly UVB protection but does not adequately cover the UVA part of the spectrum.

Up to now, no generally accepted method (in vivo or in vitro) has been available. Various in vivo methods to determine the UVA protection level are known such as persistent pigment darkening (PPD) or immediate pigment darkening (IPD). The in vivo methods rely on the pigmentation or erythema produced after exposure to high doses of UVA radiation (10-20 J/cm$^2$) combined with a long exposure time [C. Cole; Sunscreen protection in the ultraviolet A region: how to measure the effectiveness; Photodermatol Photoimmunol Photomed, **17**, 2-10, 2001].

In contrast, the newly developed in vitro method exhibits a very good inter-laboratory reproducibility of the relative parameters, e.g. the critical wavelength or the UVA/UVB ratio. Until now, all absolute in vitro parameters have shown a strong dependence on the layer thickness of applied products and therefore a limited reproducibility.

In order to bypass these problems, an improved in vitro method with its well known advantages, e.g. easy to handle (no animals, no volunteers), high reproducibility and short measuring times, needs to be designed incorporating the advantages of in vivo experiments.

The present invention, therefore, relates to a new approach and describes a new method for the determination of the UVA protection performance of sunscreens.

## Materials and methods

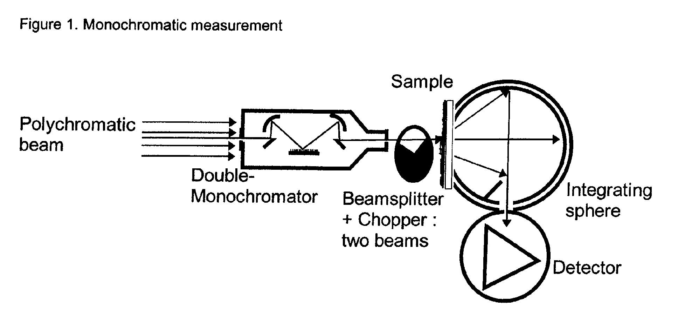

A schematic representation of the measuring device is presented in Fig. 1. This dual beam spectrometer is equipped with two light sources, a deuterium lamp for the UVB region and a tungsten-halogen lamp for UVA light. After the light passes through a doublemonochromator, a beamsplitter and a chopper direct the monochromatic beam either through the sample or through the reference. Monochromatic irradiation avoids possible thermal artefacts.

The spectrometer is equipped with a light collecting integration sphere, as required for measuring light-scattering films accurately.

## Sunscreens

For our investigations we tested 45 samples representing the whole range of commercially available sunscreens in the European and American market. These samples contain all of the established UV filters and UV filter combinations used in sunscreen products. They reflect the whole spectrum of photostable and less photostable UV filter combinations. The selected products cover the range of SPF=2 to SPF=50 and different types of emulsions (water in oil/oil in water/ hydrodispersion / oil / alcoholic solution). Detailed information is listed in tab. 1.

Tab1:

| Type | SPF | UV filter combination |
|---|---|---|
| OW | 2 | BMDBM/ MBC |

Tab1: (continued)

| Type | SPF | UV filter combination |
|---|---|---|
| OW | 5 | BMDBM/ TDSA/ EHT/ OC/ |
| OW | 5 | BMDBM/ TDSA/ EHT/ OC |
| OW | 6 | BMDBM/ MBC/ |
| OW | 6 | BMDBM/ MBC/ EHMC |
| O | 8 | BMDBM/ OC |
| OW | 10 | OC/ BEMT/ DPDT/ |
| OW | 10 | BMDBM/ MBC/ EHT/ |
| ALC | 10 | BMDBM/ MBC/ DT/ OC |
| OW | 10 | BMDBM/ MBC/ PBSA/ OC |
| OW | 10 | TiO 2/ BEMT/ EHMC |
| HD | 10 | BMDBM/ MBC/ EHT/ PBSA/ TiO 2/ BEMT/ DBT |
| OW | 12 | BMDBM/ MBC/ EHT/ TiO 2 |
| OW | 12 | BMDBM/ EHMC/ |
| WO | 15 | BMDBM/ MBC/ EHT/ TiO 2 |
| WO | 15 | BMDBM/ MBC/ OC/ ES |
| ALC | 15 | BMDBM/ MBC/ PBSA/ OC/ EHMC |
| OW | 15 | TiO 2/ BEMT/ EHMC |
| WO | 15 | BMDBM/ MBC/ OC/ ES/ |
| O | 16 | BMDBM/ MBC/ EHT/ OC/ ES/ |
| OW | 20 | BMDBM/ MBC/ EHT/ PBSA/ DBT |
| OW | 20 | BMDBM/ TDSA/ EHT/ TiO 2/ DT/ OC/ |
| HD | 24 | BMDBM/ OC/ EHMC |
| HD | 24 | BMDBM/ MBC/ EHT/ TiO 2/ |
| OW | 25 | TiO 2/ OC/ BEMT/ DPDT/ EHMC |
| OW | 25 | MBC/ EHT/ PBSA/ BEMT/ DPDT/ EHMC |
| OW | 26 | BMDBM/ MBC/ EHT/ TiO2/ PBSA/ |
| WO | 26 | BMDBM/ OC/ EHMC/ |
| OW | 30 | BMDBM/ TDSA/ TiO2/ OC/ |
| WO | 30 | BMDBM/ MBC/ TiO 2/ OC/ ES |
| OW | 30 | BMDBM/ MBC/ EHT/ PBSA/ TiO 2 |
| WO | 30 | BMDBM/ MBC/ TiO 2/ OC/ ES |
| WO | 30 | PBSA/ OC/ EHMC/ ZnO |
| HD | 30 | BMDBM/ MBC/ EHT/ TiO 2/ |
| HD | 30 | BMDBM/ MBC/ EHT/ PBSA |
| HD | 30 | BMDBM/ MBC/ EHT/ PBSA/ TiO 2/ DBT |
| OW | 30 | EHMC/ ES/ BENZ-3/ HMS |

Tab1: (continued)

| Type | | SPF | UV filter combination |
|---|---|---|---|
| | WO | 30 | TiO 2/ OC/ EHMC/ ES/ BENZ-3 |
| | WO | 30 | PBSA/ OC/ EHMC/ ZnO |
| | OW | 30 | BMDBM/ MBC/ TiO 2/ EHMC |
| | WO | 35 | BMDBM/ MBC/ EHT/ TiO 2/ |
| | WO | 35 | BMDBM/ TDSA/ MBC/ TiO 2/ OC |
| | WO | 40 | BMDBM/ MBC/ EHT/ TiO 2/ DPDT/ BEMT/ DBT |
| | OW | 45 | BMDBM/ TDSA/ EHT/ TiO 2/ DT/ OC |
| | WO | 50 | BMDBM/ MBC/ EHT/ PBSA/ TiO 2/ |

Abbreviations: BMDBM = Butylmethoxydibenzoylmethane; EHC = Ethylhexylmethoxycinnamate; EHT = Ethylhexyltriazone; MBC= Methylbenzylidene Camphor; OC = Octocrylene; PBSA = Phenylbenzimidazole Sulfonic Acid; TDSA = Terephthalydene Dicamphor Sulfonic Acid; TiO2 = Titanium dioxide; ZnO = Zinc oxide; DT = Drometrizole Trisiloxane; DBT = Diethylhexyl Butamido Triazine; DPDT = Disodim Phenyl Dibenzimidazole Tetrasulfonate; BEMT = Bis-Ethylhexyloxyphenol Methoxyphenyl Triazine; ES = Ethylhexyl Salicylate; HMS = Homosalate; BENZ-3 = Benzophenone-3; WO = water in oil emulsion; OW = oil in water emulsion; O = oil; HD = hydrodispersion; ALC = alcoholic solution

## Substrates

Roughened Plexiglas® (**PMMA,** Röhm GmbH, Darmstadt, Typ XT, transparent, 24770 UVD) plates were produced commercially by the following procedure: The 2.5 mm thick PMMA plates were roughened with a sand blast unit filled with glass beads of defined size (diameter of 90-150 µm, pressure of 6 bar and a distance of 30 cm). Afterwards the PMMA plates were cut into slides of 5cm * 5 cm.

## Sample application

Routine application started with saturating the (latex-) gloved finger for about one minute with the product. Before applying the sample, the weight of the plate was recorded.There are two basic requirements for the optimal amount of product applied. On the one hand, distribution on the plate should be as homogeneous as possible. On the other hand, theabsorbance of samples with a high content of UV filters should not exceed the optimum dynamic range of the spectrometer used (E<2). Application of 0.75 mg/cm$^2$ seems to be suitable for the majority all products.The sample was spotted evenly across the plate surface with an appropriate device such as a microsyringe or a self-displacing pipette.

The applied spots were then distributed using a presaturated finger-cot. Spreading of the sample is a critical parameter and therefore was always carried out according to a strictly defined procedure: For about 30 seconds the emulsion was spread with only slight pressure to prevent unintended losses at the edges of the plate. After almost all of the volatile components had disappeared, spreading was continued with a considerably higher pressure for another 30 seconds (about 200g).

Following application the plates were equilibrated in the dark for 15 minutes.

A roughened PMMA plate with a homogeneous layer of glycerine was used as a reference substrate.

## Measurement

As described by different authors [A. D. Pearse, C. Edwards, Human stratum corneum as a substrate for in vitro sunscreen testing, Int. J. Cosm. Sci., **15**, 234-244 (1993), B.L. Diffey, J. Robson, A new substrate to measure sunscreen protection factors throughout the ultraviolet spectrum, J. Cosmet. Chem., **40,** 127-133 (1989), R.M. Sayre, P.P. Agin, G.J. Levee and E. Marlowe, A comparison of in vivo and in vitro testing of sunscreening formulas, Photochem. Photobiol., **29**, 112-119, (1979)], the principle of the analysis is a transmission measurement. The glycerine on the reference substrate serves as a "blank" emulsion, which contains no light-absorbing or -scattering compounds and reduces artificial scattering by the roughened, dry surface much the same as a placebo . Transmission measurements were performed at not less than four different positions on each plate.

**Calculations**

**Conversion of raw data**

Prior to manipulation, transmission data were converted to absorbance values as shown below, taking also into account the electrical noise ($I_{backgr}$)(Equation 1).

## Equation 1

$$A = \log(MPF) = \log\left(\frac{I_{ref} - I_{backgr}}{I_{sample} - I_{backgr}}\right)$$

Where:

A = absorbance
$I_{ref}$= intensity of the transmission signal through the substrate without sunscreen
$I_{sample}$ = intensity of the transmission signal through the substrate with sunscreen
MPF = monochromatic protection factor (1/T)
T = transmission

**Sun protection factor**

The in vitro sun protection factor (SPF) was calculated using Equation 2:

## Equation 2

$$SPF_{vitro} = \frac{\int_{290nm}^{400nm} E(\lambda) * S(\lambda)}{\int_{290nm}^{400nm} E(\lambda) * S(\lambda) / MPF(\lambda)} = \frac{\int_{290nm}^{400nm} E(\lambda) * S(\lambda)}{\int_{290nm}^{400nm} E(\lambda) * S(\lambda) / 10^{A_\lambda}}$$

Where

E($\lambda$) = irradiance at wavelength $\lambda$ of the light spectrum used
S($\lambda$) = effectiveness of a biological endpoint at wavelength $\lambda$;

for the SPF it is the erythema action spectrum [CIE action spectra for UV-erythem; A reference action spectrum for Ultraviolet inducrd erythema in human skin, CIE Research Note 6; (1987)]

MPF = monochromatic protection factor (1/T)
A($\lambda$) = absorbance

**Adjustment of the measured in vitro spectrum to the label in vivo SPF (normalisation)**

If the in vitro SPF calculated from the transmission data is unequal to the label SPF measured in vivo, an alignment of the absorbance spectra by an iterative process is performed until the measured in vitro SPF is equal to the measured in vivo SPF. The iteration is applied to the constant C in equation 3. During this mathematical alignment only the height of the absorbance spectrum is altered, i.e. the thickness of the applied layer is corrected to correspond to that of the in vivo SPF. The shape of the spectrum reflecting the particular UV filter combination of the product under test remains unchanged.

## Equation 3

$$SPF_{vivo} = SPF_{vitro} = \frac{\int\limits_{290nm}^{400nm} E(\lambda) * S(\lambda)}{\int\limits_{290nm}^{400nm} E(\lambda) * S(\lambda)/10^{(A_\lambda * C)}}$$

Where

E($\lambda$) = irradiance at wavelength $\lambda$ of the light spectrum used
S($\lambda$) = effectiveness of a biological endpoint at wavelength $\lambda$
A($\lambda$) = absorbance
C = constant factor for the adjustment of the spectrum

**Calculation of the UVA protection performance of the normalised spectrum:**

Using equation 3 and the thickness-normalised absorption data it is possible to calculate various absolute protection factors based on different flux situations and/or different action spectra ( e.g. a PPD-PF or another UVAPF).
For the calculation of PPD-PF according to equation 3 it is necessary to:

choose the integration area from 320nm to 400 nm,
use a spectrum (E$\lambda$) of a common irradiation device (e.g. multiport solar simulator) and
use the action spectrum of persistent pigment darkening (S($\lambda$)) (equation 4)

## Equation 4

$$UVAPF_{calculated} = \frac{\int\limits_{320nm}^{400nm} E(\lambda) * S(\lambda)}{\int\limits_{320nm}^{400nm} E(\lambda) * S(\lambda)/10^{(A_\lambda * C)}}$$

Where

E($\lambda$) = irradiance of the UVA light spectrum of an multiport irradiation device at wavelength $\lambda$

S($\lambda$) = PPD action spectrum from 320nm to 400 nm
[A. Chardon, D. Moyal, C. Hourseau; Persistent Pigment Darkening Response as a Method for Evaluation of UVA Protection Assays; Lowe, Shaath. Pathak, Sunscreens, Marcel Dekker, 559-582, (1997)]

A($\lambda$) = absorbance

C = constant factor for adjustment of the spectrum as in equation 3

**Results and discussion**

An improved, fast and reproducible in vitro transmission method to predict the level of UVA protection of a sunscreen was developed.
The proposed method combines the well-established method for determining UVB protection (in vivo SPF) and the advantages of determining relative parameters by in vitro measurements. Therefore this new method requires only a single in vivo measurement (the label SPF), which is the most important parameter for each sunscreen.

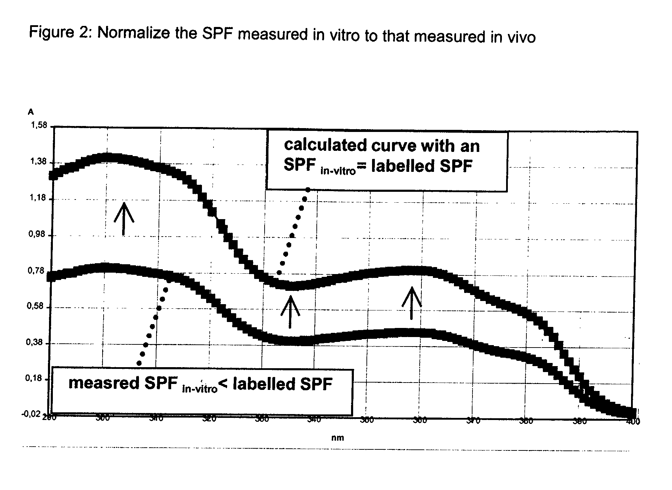

To achieve appropriate distribution on the roughened PMMA substrate and measurement in the best detection range of the photometer, an amount of 0,75 mg/cm$^2$ was applied. Therefore, the amount of products applied to the substrate in the in vitro method is smaller then that applied to the skin in the COLIPA method for SPF testing and the measured in vitro-SPF is different from the labeled in vivo SPF. To normalize the SPF measured in vitro to that measured in vivo, the in vitro transmission spectrum was first converted to an absorbance spectrum . If the calculated in vitro SPF differed from the label in vivo SPF the absorption spectrum was transformed by an iterative procedure until the in vitro SPF calculated from the new spectrum equalled the label in vivo SPF. This procedure is illustrated in Fig 2.

With this new absorption spectrum it was possible to calculate the UVA protection performance of the investigated sample. Used for the calculation was only the range from 320nm to 400nm (PPD) and therefore the light spectrum of the multiport irradiation device and PPD action spectrum.

To validate the calculated UVA protection values, the in vivo UVA protection values of all 45 samples were measured by an external institute under the same conditions (multiport irradiation device) in a short period of two months. The PPD endpoint was used as the statistical endpoint in the UVA range.

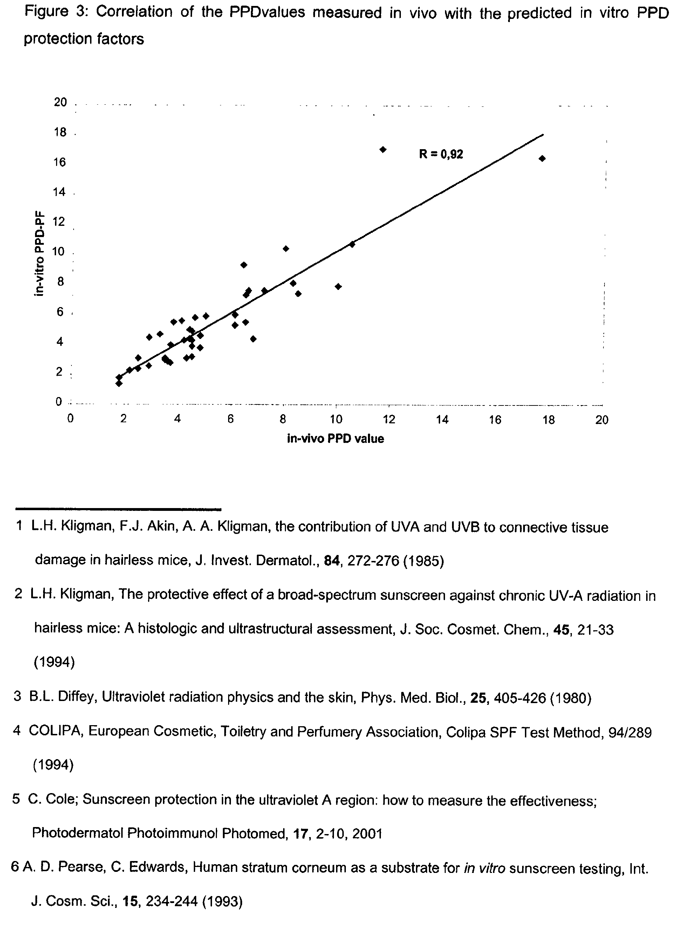

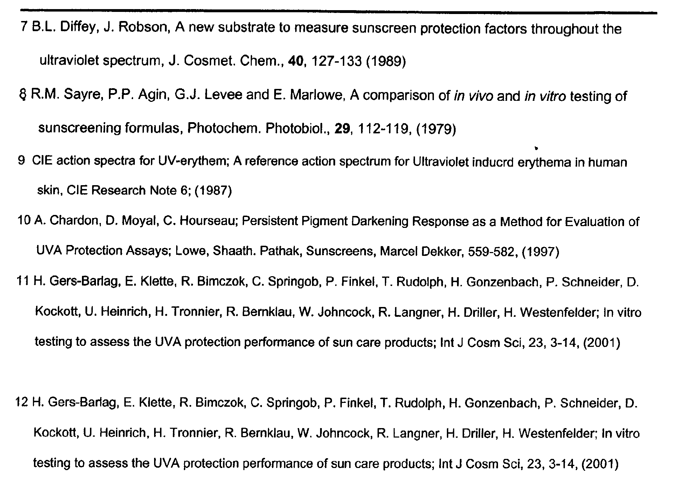

Fig.3 shows the correlation between the calculated, predicted UVA protection performance and the values measured in vivo. There is a very good correlation over the whole range with a correlation factor of R=0.92 .

By using the in vivo SPF for standardization of the in vitro PPD value it is possible to combine the advantages of the in vivo method and those of the in vitro method. It is not necessary, for example, to apply the same amount of product as that used normally for the in vivo SPF measurement. It is only important to ensure that the product is uniformly distributed on the substrate using a well defined application technique and that the amount of product applied is chosen so that the transmission measurements are in the optimal detection range of the photometer, especially for samples with a high UV filter concentration.

Furthermore, standardization with the label in vivo SPF ensures that possible interactions of the sample with the skin due to the higher in vivo application amount of 2 mg/cm$^2$ will be taken into account in the in vitro measurement.

Moreover, no pre-irradiation of the samples is necessary. The high dose of UV light in the UVB and UVA range during the SPF measurement stresses especially samples with high SPF values. Photoinstability would influence the SPF data. Therefore, a possible photoinstability of UV filter systems is already included in the calculated in vitro PPD-factor through the in vivo SPF measurement.

In conclusion, it is possible with the new in vitro method to predict the in vivo UVA protection performance. The very good correlation of the in vitro PPD-PF endpoint values with the in vivo PPD values confirms the validity of this new method (Fig.3).

**Conclusion**

The in vitro measurements described combine the advantages of in vitro assays that provide relative parameters with the advantages of the long-established in vivo SPF determination. The in vivo SPF is used as the internal standard for the fitting procedure described.

The validity of a mathematical transformation of absorption spectra with a constant factor without changing the shape of the curve is well documented [H. Gers-Barlag, E. Klette, R. Bimczok, C. Springob, P. Finkel, T. Rudolph, H. Gonzenbach, P. Schneider, D. Kockott, U. Heinrich, H. Tronnier, R. Bernklau, W. Johncock, R. Langner, H. Driller, H. Westenfelder; In vitro testing to assess the UVA protection performance of sun care products; Int J Cosm Sci, 23, 3-14, (2001)12].

Based on these results, it was possible to develop a novel in vitro method for the determination of the UVA protection performance of a sunscreen with a known in vivo SPF.

The transmission spectra of 45 different sunscreen samples can be related to the in vivo measurements by applying a mathematical iteration procedure. The protection performance of the sunscreen product can be predicted and expressed as an in vitro PPD protection factor.

The validity of the predicted UVA protection performance is shown by an excellent correlation with the PPD values of the same samples measured in vivo.

Standardization with the SPF measure in vivo makes pre-irradiation of the samples unnecessary.

Finally this new method has the potential to harmonise the UVA-discussion.

**Claims**

1. In-vitro test method to measure the UVA protection performance (UVAPF) of sun care products by measuring the in-vitro absorbance data, normalising the spectrum to the in-vivo SPF and calculating the UVA protection performance by the following formula:

$$UVAPF_{calculated} = \frac{\int\limits_{320nm}^{400nm} E(\lambda) * S(\lambda)}{\int\limits_{320nm}^{400nm} E(\lambda) * S(\lambda)/10^{(A_\lambda *C)}}$$

Where

$E(\lambda)$ = irradiance at wavelength $\lambda$ of the light spectrum used
$C$ = constant factor for the adjustment of the spectrum to the in-vivo measurement
$S(\lambda)$ = effectiveness of a biological UVA endpoint at wavelength $\lambda$;
$A(\lambda)$ = absorbance

Figure 1. Monochromatic measurement

Figure 2: Normalize the SPF measured in vitro to that measured in vivo

Figure 3: Correlation of the PPDvalues measured in vivo with the predicted in vitro PPD protection factors

1 L.H. Kligman, F.J. Akin, A. A. Kligman, the contribution of UVA and UVB to connective tissue damage in hairless mice, J. Invest. Dermatol., **84**, 272-276 (1985)

2 L.H. Kligman, The protective effect of a broad-spectrum sunscreen against chronic UV-A radiation in hairless mice: A histologic and ultrastructural assessment, J. Soc. Cosmet. Chem., **45**, 21-33 (1994)

3 B.L. Diffey, Ultraviolet radiation physics and the skin, Phys. Med. Biol., **25**, 405-426 (1980)

4 COLIPA, European Cosmetic, Toiletry and Perfumery Association, Colipa SPF Test Method, 94/289 (1994)

5 C. Cole; Sunscreen protection in the ultraviolet A region: how to measure the effectiveness; Photodermatol Photoimmunol Photomed, **17**, 2-10, 2001

6 A. D. Pearse, C. Edwards, Human stratum corneum as a substrate for *in vitro* sunscreen testing, Int. J. Cosm. Sci., **15**, 234-244 (1993)

7 B.L. Diffey, J. Robson, A new substrate to measure sunscreen protection factors throughout the ultraviolet spectrum, J. Cosmet. Chem., **40**, 127-133 (1989)

8 R.M. Sayre, P.P. Agin, G.J. Levee and E. Marlowe, A comparison of *in vivo* and *in vitro* testing of sunscreening formulas, Photochem. Photobiol., **29**, 112-119, (1979)

9 CIE action spectra for UV-erythem; A reference action spectrum for Ultraviolet inducrd erythema in human skin, CIE Research Note 6; (1987)

10 A. Chardon, D. Moyal, C. Hourseau; Persistent Pigment Darkening Response as a Method for Evaluation of UVA Protection Assays; Lowe, Shaath. Pathak, Sunscreens, Marcel Dekker, 559-582, (1997)

11 H. Gers-Barlag, E. Klette, R. Bimczok, C. Springob, P. Finkel, T. Rudolph, H. Gonzenbach, P. Schneider, D. Kockott, U. Heinrich, H. Tronnier, R. Bernklau, W. Johncock, R. Langner, H. Driller, H. Westenfelder; In vitro testing to assess the UVA protection performance of sun care products; Int J Cosm Sci, 23, 3-14, (2001)

12 H. Gers-Barlag, E. Klette, R. Bimczok, C. Springob, P. Finkel, T. Rudolph, H. Gonzenbach, P. Schneider, D. Kockott, U. Heinrich, H. Tronnier, R. Bernklau, W. Johncock, R. Langner, H. Driller, H. Westenfelder; In vitro testing to assess the UVA protection performance of sun care products; Int J Cosm Sci, 23, 3-14, (2001)

EP 1 291 640 A1

**European Patent Office**

**EUROPEAN SEARCH REPORT**

Application Number

EP 01 12 1211

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 2 710 151 A (BIODERMA LABORATOIRE) 24 March 1995 (1995-03-24) * page 4, line 11 - page 11 * | 1 | G01N21/33 G01N21/59 G01J1/42 |
| A | US 5 500 533 A (KUMAGAI SHIGENORI ET AL) 19 March 1996 (1996-03-19) * column 7, line 40 - column 14, line 62 * | 1 | |
| D,A | DIFFEY B L ET AL: "A NEW SUBSTRATE TO MEASURE SUNSCREEN PROTECTION FACTORS THROUGHOUT THE ULTRAVIOLET SPECTRUM" JOURNAL OF THE SOCIETY COSMETIC CHEMISTS, NEW-YORK, NY, US, vol. 40, no. 3, 1 May 1989 (1989-05-01), pages 127-133, XP000571875 * page 130, paragraph 1 - page 131, paragraph 4 * | 1 | |
| A | SAYRE R M: "CORRELATION OF IN-VIVO TESTS, IN-VITRO SPF PREDICTIONS A SURVEY OF PUBLISHED STUDIES" COSMETICS & TOILETRIES, WHEATON, IL, US, vol. 108, 1 February 1993 (1993-02-01), pages 111-114, XP000573062 ISSN: 0361-4387 * the whole document * | 1 | TECHNICAL FIELDS SEARCHED (Int.Cl.7) G01N G01J |

The present search report has been drawn up for all claims

| Place of search | Date of completion of the search | Examiner |
|---|---|---|
| MUNICH | 11 February 2002 | Jacquin, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 01 12 1211

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2002

| Patent document cited in search report | | Publication date | Patent family member(s) | | Publication date |
|---|---|---|---|---|---|
| FR 2710151 | A | 24-03-1995 | FR | 2710151 A1 | 24-03-1995 |
| US 5500533 | A | 19-03-1996 | AU | 675347 B2 | 30-01-1997 |
| | | | AU | 7425694 A | 06-04-1995 |
| | | | DE | 4434495 A1 | 30-03-1995 |
| | | | JP | 7167781 A | 04-07-1995 |

EPO FORM P0459

For more details about this annex : see Official Journal of the European Patent Office, No. 12/82